# EUROPEAN PATENT APPLICATION

(11) **EP 4 451 432 A1**
(43) Date of publication of application: **23.10.2024**
(21) Application number: 24153215.9
(22) Date of filing: 22.01.2024
(51) Int. Cl.: H01M 50/103, H01M 50/15, H01M 50/176, H01M 50/528, H01M 50/531, H01M 50/533, H01M 50/536, H01M 50/55, H01M 50/553, H01M 50/566, H01M 50/567

(54) **SECONDARY BATTERY**

(30) Priority: 17.04.2023 KR 20230050198
(71) Applicant: Samsung SDI Co., Ltd., Yongin-si, Gyeonggi-do 17084 (KR)
(72) Inventor: Bae, Kwang Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Kim, Jung Soo, 17084 Yongin-si, Gyeonggi-do (KR)
(74) Representative: Gulde & Partner

(57) **Abstract**

A secondary battery (100) includes: an electrode assembly (110) having a first electrode tab and a second electrode tab exposed on opposite sides, respectively; a first current collection part (120) electrically coupled to the first electrode tab; a case (160) accommodating the electrode assembly (110) and the first current collection part (120); a first cap plate (171) sealing an opening (161, 162) of the case (160); a first terminal (130) mechanically and electrically coupled to the first current collection part (120) and exposed to the outside of the first cap plate (171); and a blind rivet (175) coupling the first terminal and the first current collection part (120).

## Description

### BACKGROUND

### 1. Field

Aspects of some embodiments of the present invention relate to a secondary battery.

### 2. Description of the Related Art

A secondary battery is a power storage system that provides excellent energy density and is capable of converting electrical energy into chemical energy and storing the same. Compared to non-rechargeable primary batteries, secondary batteries are rechargeable and are widely used in IT devices such as smart phones, cellular phones, notebooks, and tablet PCs. Recently, interest in electric vehicles has increased to prevent or reduce environmental pollution, and accordingly, high-capacity secondary batteries are being adopted for electric vehicles. It may be desirable for such secondary batteries to have characteristics such as high density, high power, and stability.

The above information disclosed in this Background section is only for enhancement of understanding of the background and therefore the information discussed in this Background section does not necessarily constitute prior art.

### SUMMARY

Aspects of some embodiments of the present invention include a secondary battery that may be capable of improving bonding strength by combining a terminal and a current collector plate by utilizing a blind rivet to form a pressing force between the terminal and the current collector plate and then welding.

A secondary battery according to some embodiments of the present invention includes: an electrode assembly having a first electrode tab and a second electrode tab exposed on both sides, respectively; a first current collection part electrically coupled to the first electrode tab; a case accommodating the electrode assembly and the first current collection part and optionally having both sides opened; a first cap plate sealing an (e.g., one side) opening of the case; a first terminal mechanically and electrically coupled to the first current collection part and exposed to the outside of the first cap plate; and a blind rivet for coupling the first terminal and the first current collection part.

According to some embodiments, the first current collection part may include a first current collector plate coupled to the first electrode tab by welding, and may include a second current collector plate contacting the outer surface of the first current collector plate and contacting and coupled to the inner surface of the first terminal.

According to some embodiments, the first current collector plate may include a central part having a central region that protrudes outward and having an outer surface coupled to the inside of the second current collector plate by welding, and may include an edge part extending in both directions from the central part and welded to the first electrode tab of the electrode assembly.

According to some embodiments, a bent part that is inclined from the central part toward the edge part may be formed between the central part and the edge part.

According to some embodiments, a size of the central part of the first current collector plate may be smaller than that of an inner surface of the second current collector plate.

According to some embodiments, a protrusion part that protrudes outward may be further provided on the central region of the second current collector plate.

According to some embodiments, an outer surface of the protrusion part may contact and be welded to an inner surface of the first terminal.

According to some embodiments, the protrusion part may be provided with a current collector through-hole.

According to some embodiments, the first terminal may include a first terminal through-hole at a position corresponding to the current collector through-hole.

According to some embodiments, the protrusion part may contact a region adjacent to the first terminal through-hole in the first terminal plate.

According to some embodiments, a diameter of the first terminal through-hole may be smaller than that of the current collector through-hole.

According to some embodiments, the blind rivet may pass through the first terminal through-hole and the current collector through-hole.

According to some embodiments, the blind rivet may include: a rivet shell passing through the first terminal through-hole and the current collector through-hole; and a rivet stem passing through the rivet shell.

According to some embodiments, each of the rivet shell and the rivet stem may include: a head part positioned outside the first terminal plate; a body part extending from the head part and inserted into the first terminal through-hole and the current collector through-hole; and a flange part extending from the body part and positioned inside the second current collector plate.

According to some embodiments, in the rivet stem, a diameter of the head part may be smaller than that of the flange part.

According to some embodiments, in the rivet shell, a diameter of the head part may be larger than that of the flange part.

According to some embodiments, the blind rivet may be a closed-type blind rivet.

According to some embodiments, on the central part of the first current collector plate, an additional through-hole may be provided at a position corresponding to the current collector through-hole.

According to some embodiments, a clad sheet may be provided between the first current collection part and the first terminal.

According to some embodiments, an insulation member between the first terminal and the first cap plate may be further included. The insulation member may be interposed between the first terminal and the first cap plate.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is a perspective view of a secondary battery according to some embodiments of the present invention.
FIG. 2 is a cross-sectional view of the secondary battery of FIG. 1, taken along the line 2-2'.
FIG. 3 is a partial cross-sectional view of an enlarged portion 3 in FIG. 2.
FIG. 4 is an exploded perspective view showing a terminal of the secondary battery of FIG. 1 before being coupled to a current collection part.
FIG. 5A is a perspective view illustrating the terminal of the secondary battery of FIG. 1.
FIG. 5B is a perspective view illustrating a second current collector plate of the secondary battery of FIG. 1.
FIGS. 6A to 6B are partial cross-sectional views illustrating a process in which the terminal of the secondary battery of FIG. 1 and the second current collector plate are coupled through a blind rivet.
FIG. 7 is a partial cross-sectional view of FIG. 1 illustrating a process in which an electrolyte is injected into a secondary battery according to some embodiments of the present invention.

### DETAILED DESCRIPTION

Hereinafter, aspects of some embodiments of the present invention will be described in more detail with reference to the accompanying drawings.

Aspects of some embodiments of the present invention are illustrated and described to more completely explain embodiments according to the present invention to those skilled in the art, and the following examples may be modified in various other forms. The present invention, however, may be embodied in many different forms and should not be construed as being limited to the example embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

Aspects of some embodiments of the present invention will now be described in more detail with reference to the accompanying drawings to the extent that a person skilled in the art to which the present invention belongs can easily implement the present invention.

Here, the same reference numerals are attached to parts having similar configurations and operations throughout the specification. In addition, when a part is said to be electrically coupled to another part, this includes not only a case where it is directly connected but also a case where it is connected with another element interposed therebetween.

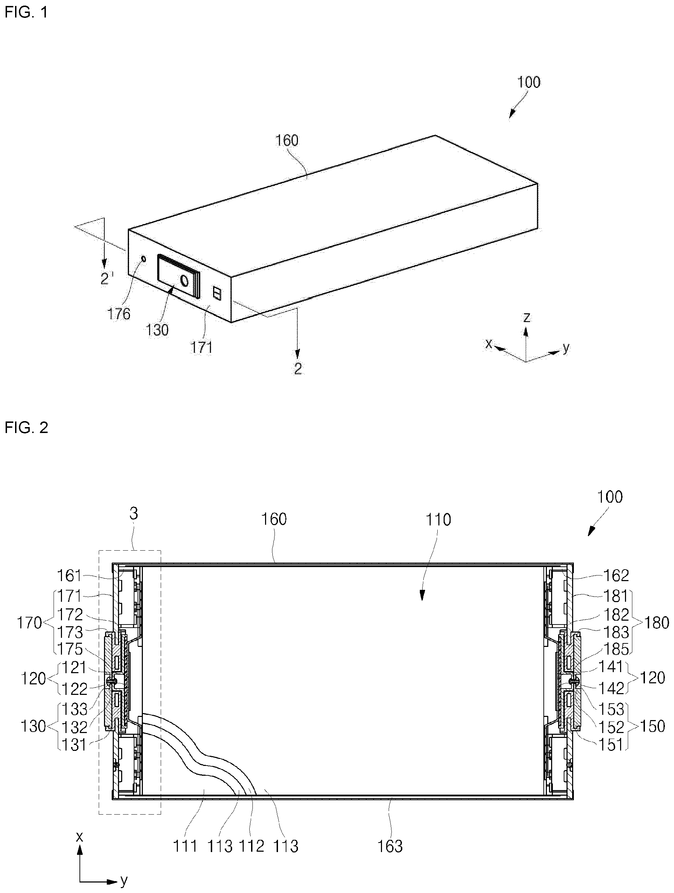

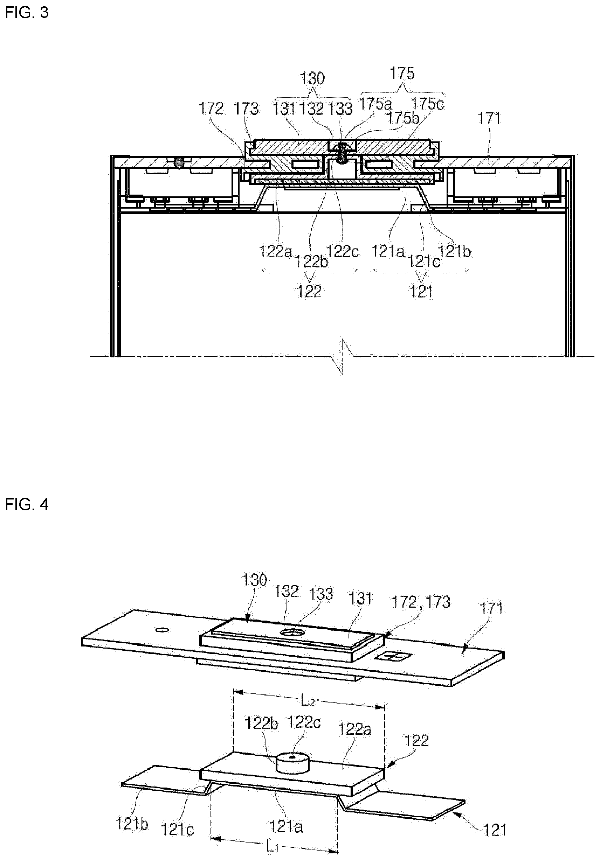

Referring to FIG. 1, a perspective view of a secondary according to some embodiments of the present invention is shown. Referring to FIG. 2, a cross-sectional view of the secondary battery of FIG. 1, taken along the line 2-2' is shown. Referring to FIG. 3, a partial cross-sectional view of an enlarged portion 3 in FIG. 2 is shown. Hereinafter, in describing the secondary battery 100 according to some embodiments of the present invention, the structure of the secondary battery 100 will be described on the basis of the secondary battery 100 shown in FIG. 1.

As shown in FIGS. 1 to 3, the secondary battery 100 may include an electrode assembly 110, a first current collection part 120, a first terminal 130, a second current collection part 140, a second terminal. 150, a case 160, a first cap assembly 170, and a second cap assembly 180.

The electrode assembly 110 may be formed by winding or stacking a laminate of a first electrode plate 111, a separator 113, and a second electrode plate 112, which are formed in a thin plate shape or film shape. When the electrode assembly 110 is a wound laminate, a winding axis may be parallel to the longitudinal direction (e.g., in the y direction in FIGS. 1 and 2) of the case 160. In addition, the electrode assembly 110 may be a stack type rather than a winding type, and the shape of the electrode assembly 110 is not limited in embodiments according to the present invention. In addition, the electrode assembly may be a Z-stack electrode assembly in which a positive electrode plate and a negative electrode plate are inserted into both sides of a separator bent into a Z-stack. In addition, one or more electrode assemblies 110 may be stacked such that long sides of the electrode assemblies 110 are adjacent to each other and accommodated in the case 160. In the present invention, the number of electrode assemblies 110 is not limited.

The first electrode plate 111 of the electrode assembly 110 may serve as a negative electrode, and the second electrode plate 112 may serve as a positive electrode. Of course, the reverse is also possible according to various embodiments of the present invention.

The first electrode plate 111 may include a first electrode tab (or a first uncoated portion) which is formed by applying a first electrode active material such as graphite or carbon to a first electrode current collector plate made of a metal foil such as copper, a copper alloy, nickel, or a nickel alloy, and is a region to which the first electrode active material is not applied. The first electrode tab may operate as a passage for to current flow between the first electrode plate 111 and the first current collection part 120. According to some embodiments, when manufacturing the first electrode plate 111, the first electrode tab may be formed by being cut in advance to protrude to one side, and may protrude more to one side than the separator 113 without separate cutting.

The second electrode plate 112 may include a second electrode tab (or second uncoated portion) which is formed by applying a second electrode active material a second electrode active material such as a transition metal oxide to a second electrode current collector plate made of a metal foil such as aluminum or an aluminum alloy, and is a region to which the second electrode active material is not applied. The second electrode tab may operate as a passage for current to flow between the second electrode plate 112 and the second current collection part 140. According to some embodiments, when manufacturing the second electrode plate 112, the second electrode tab may be formed by being cut in advance to protrude to the other side, and may protrude more to the other side than the separator 113 without separate cutting.

According to some embodiments, the first electrode tab may be located on the left side of the electrode assembly 110, and the second electrode tab may be located on the right side of the electrode assembly 110. Here, the left and right terms are for convenience of explanation based on the secondary battery 100 shown in FIGS. 1 and 2, and the positions of the secondary battery 100 can be changed when the secondary battery 100 rotates left and right or up and down. Hereinafter, each component will be described on the basis of the secondary battery 100 shown in FIGS. 1 to 3.

According to some embodiments, the separator 113 is positioned between the first electrode plate 111 and the second electrode plate 112 to prevent a short circuit and to enable the movement of lithium ions, and may include polyethylene, polypropylene, or a composite film of polyethylene and polypropylene. In addition, the separator 113 may be replaced with an inorganic solid electrolyte such as a sulfide, oxide, or phosphate compound that does not require a liquid or gel electrolyte.

The first electrode tab of the first electrode plate 111 and the second electrode tab of the second electrode plate 112 are respectively positioned at both ends of the electrode assembly 110. According to some embodiments, the electrode assembly 110 may be accommodated in the case 160 together with an electrolyte. According to some embodiments, the electrolyte may include a lithium salt such as LiPF6 or LiBF4 in an organic solvent such as EC, PC, DEC, EMC, or DMC. In addition, the electrolyte may be in a liquid or gel phase. According to some embodiments, when an inorganic solid electrolyte is used, the electrolyte may be omitted.

In addition, the electrode assembly 110 is located such that the first current collection part 120 and the second current collection part 140 are welded to and connected to the first electrode tab of the first electrode plate 111 and the second electrode tab of the second electrode plate 112 exposed to both sides.

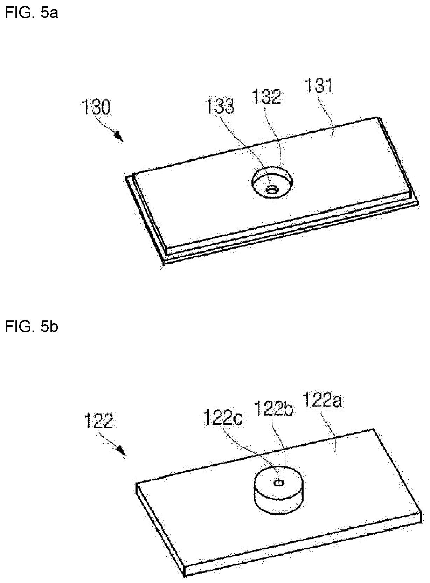

The first current collection part 120 can be made of metal and can electrically connect the first electrode plate 111 and the first terminal 130 to each other. Referring to FIG. 4, an exploded perspective view showing a terminal of the secondary battery of FIG. 1 before being coupled to a current collection part is shown. Referring to FIG. 5A, a perspective view illustrating the terminal of the secondary battery of FIG. 1 is shown. Referring to FIG. 5B, a perspective view illustrating a second current collector plate of the secondary battery of FIG. 1 is shown. Hereinafter, the structure and coupling relationship of the first current collection part 120 will be described in more detail with reference to FIGS. 4 to 5B.

The first current collection part 120 can be accommodated inside the case 160 and interposed between the first cap plate 171 and the electrode assembly 110.

The first current collection part 120 can include a first current collector plate 121 contacting and coupled to the first electrode tab (uncoated portion) of the first electrode plate 111; and a second current collector plate 122 contacting and coupled to the first terminal 130. The first current collection part 120 can be made of copper or a copper alloy.

The first current collector plate 121 extends along the first direction (x), which is the longitudinal direction of the first cap plate 171, which is one side of the electrode assembly 110, and can have a substantially plate shape. The first current collector plate 121 can be coupled to the first electrode plate 111 by welding in a state of being in contact with the first electrode tab exposed to one end of the electrode assembly 110, and thus can have the same polarity as the first electrode plate 111.

The first current collector plate 121 can include a central part 121a having a central region protruding outward, and an edge part 121b extending from the central part 121a to both sides in the first direction (x). The central part 121a can have an outer surface coupled to the inner side of the second current collector plate 122 by welding. An additional through-hole 121d can be formed in the central part 121a. The additional through-hole 121d can be formed at a position corresponding to the current collector through-hole 122c of the second current collector plate 122. A diameter of the additional through-hole 122d can be larger than that of the first terminal through-hole 133. The additional through-hole 122d can be provided to facilitate the injection of an electrolyte into the electrode assembly 110 when the electrolyte is injected into the case 160 through the current collector through-hole 122c and the first terminal through-hole 133.

The edge part 121b can have an inner surface contacting and welded to the first electrode tab of the electrode assembly 110 to then be coupled.

Compared to the edge part 121b, the central part 121a can protrude in an outward direction where the first cap plate 171 is located. The central part 121a can be spaced apart from one side of the electrode assembly 110. A bent part 121c that is inclined in a direction from the central part 121a to the edge part 121b can be formed between the central part 121a and the edge part 121b. The central part 121a is located closer to the side of the first cap plate 171 than the edge part 121b.

Accordingly, the first current collector plate 121 can include the bent part 121c and the edge part 121b provided on both sides in the first direction (x) with respect to the central part 121a.

A size of the central part 121a of the first current collector plate 121 can be smaller than that of the inner surface of the second current collector plate 122. That is, a length L1 of the central part 121a of the first current collector plate 121 in the first direction can be smaller than a length L2 of the inner surface of the second current collector plate 122. In addition, an area of the central part 121a of the first current collector plate 121 can be smaller than that of the inner surface of the second current collector plate 122.

The second current collector plate 122 extends along the first direction (x) and can have a substantially plate shape. The second current collector plate 122 can contact and be welded to the outer surface of the first current collector plate 121 and can contact and be welded to the inner surface of the first terminal 130.

The protrusion part 122b is coupled to the first terminal 130 by welding in a state in which the outer surface thereof is in contact with the inner surface of the first terminal 130. A current collector through-hole 122c can be formed in the protrusion part 122b. The current collector through-hole 122c can be formed at a position corresponding to the first terminal through-hole 133. The protrusion part 122b can contact a region adjacent to the first terminal through-hole 133 inside the first terminal plate 131. Here, a diameter of the current collector through-hole 122c can be larger than that of the first terminal through-hole 133. The second current collector plate 122 can be coupled by a blind rivet 175 passing through the first terminal through-hole 133 and the current collector through-hole 122c. The blind rivet 175 can be of a closed type.

A size of the inner surface of the second current collector plate 122 can be larger than that of the central part 121a of the first current collector plate 121. That is, a length L2 of the inner surface of the second current collector plate 122 in the first direction (x) can be larger than the length L1 of the central part 121a of the first current collector plate 121. In addition, an area of the inner surface of the second current collector plate 122 can be larger than that of the central part 121a of the first current collector plate 121.

According to some embodiments, the first terminal 130 is made of metal and can contact and be welded to the protrusion part 122b to then be electrically connected thereto. According to some embodiments, the first terminal 130 can include a first terminal plate 131, a first terminal groove 132, and a first terminal through-hole 133. The first terminal 130 can be made of aluminum or an aluminum alloy. The first terminal 130 and the first current collection part 120 can be made of different metals.

Here, a clad sheet can be further provided between the first terminal 130 and the first current collection part 120. The clad sheet can couple and electrically connect the first terminal 130 and the first current collection part 120 made of different metals, to each other. The clad sheet can be a sheet in which an aluminum sheet and a copper sheet are bonded by thermal compression. For example, the clad sheet can be a sheet in which 2T of aluminum and 0.5 to 0.7T of copper are bonded by thermal compression. The aluminum sheet of the clad sheet can be coupled to the first terminal 130 by welding, and the copper sheet can be coupled to the first current collection part 120 by welding.

The first terminal plate 131 can be located outside or above the first cap plate 171. In addition, the first terminal groove 132 can be provided in an inward direction from an outer surface of the first terminal plate 131. The first terminal plate 131 can have a thinner region in which the first terminal groove 132 is provided than other regions. The first terminal plate 131 can be coupled to the second current collector plate 122 by welding from the outside of the first cap plate 171 through the first terminal groove 132.

The first terminal groove 132 can be located in a partial region of the first terminal plate 131 and can have the first terminal through-hole 133 inside. The first terminal groove 132 can be located in approximately the central region of the first terminal plate 131 but can be located in a region corresponding to the current collector through-hole 122c of the second current collector plate 122. The blind rivet 175 inserted through the first terminal through-hole 133 can pass through the current collector through-hole 122c to bring the first terminal 130 and the second current collector plate 122 into close contact with each other to fix the same.

A diameter of the first terminal through-hole 133 can be smaller than a diameter of the current collector through-hole 122c. In a state in which the first terminal through-hole 133 and the current collector through-hole 122c are compressed by means of the blind rivet 175, the first terminal 130 and the second current collector plate 122 are welded through the first terminal through-hole 133 to then be coupled to each other.

Additionally, a first insulation member 172 can be further interposed between the first terminal plate 131 and the first cap plate 171. In addition, a first seal gasket 173 can be further interposed between the first terminal plate 131 and the first cap plate 171 or between the outer surface of the first terminal plate 131 and the first cap plate 171, thereby sealing the first terminal 130 and the first cap plate 171 with each other. The first insulation member 172 and the first seal gasket 173 can be integrally provided by injection molding and can be interposed between the first terminal 130 and the first cap plate 171.

First, the second current collector plate 122 of the first current collection part 120 can contact and be coupled to the inner surface of the first terminal plate 131. The first terminal plate 131 can include a first terminal groove 132 having a depth in an inward direction from the outer surface. The first terminal groove 132 can have a first terminal through-hole 133 passing through between one side and the other side. The diameter of the first terminal through-hole 133 can be smaller than that of the current collector through-hole 122c. The first terminal groove 132 can be located approximately at the center of the first terminal plate 131.

The blind rivet 175 can be inserted into the first terminal through-hole 133 to pass through the current collector through-hole 122c to couple the first terminal 130 and the second current collector plate 122 to each other. Here, a pressure can be applied between the first terminal 130 and the second current collector plate 122 by means of the blind rivet 175.

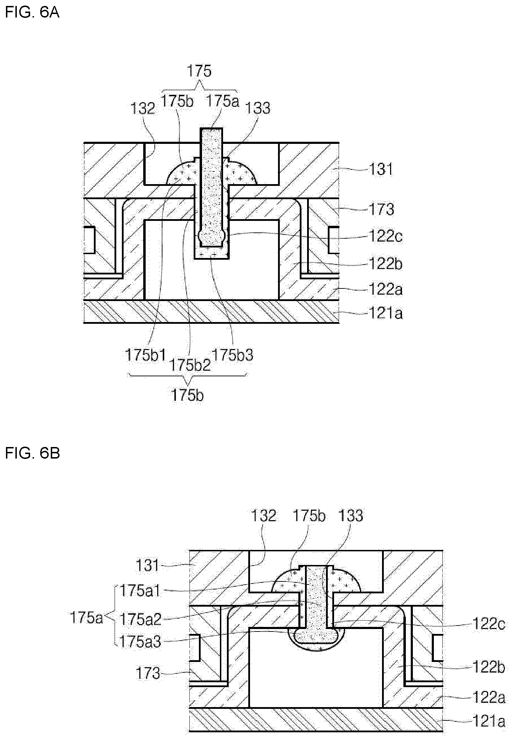

Referring to FIGS. 6A and 6B, partial cross-sectional views illustrating a process in which the terminal of the secondary battery of FIG. 1 and the second current collector plate are coupled through a blind rivet are shown. Hereinafter, a coupling relationship between the first terminal 130 and the first current collection part 120 through the blind rivet 175 will be described with reference to FIGS. 6A to 6B.

The blind rivet 175 can include a rivet stem 175a and a rivet shell 175b. The rivet shell 175b can cover the outer surface of the rivet stem 175a. The rivet shell 175b can pass through the first terminal through-hole 133 and the current collector through-hole 122c, and the rivet stem 175a can pass through the rivet shell 175b.

The rivet shell 175b can include a head part 175b1 located outside the first terminal plate 131, and a body part 175b2 extending from the head part 175b1 and located in the first terminal through-hole 133 and the current collector through-hole 122c, and a flange part 175b3 extending from the body part 175b2 and formed inside the second current collector plate 122.

In addition, the rivet stem 175a can include a head part 175a1 formed outside the first terminal plate 131, and a body part 175a2 extending from the head part 175a1 and positioned in the first terminal through-hole 133 and the current collector through-hole 122c, and a flange part 175a3 extending from the body part 175a2 and formed inside the second current collector plate 122. Here, after the blind rivet 175 is inserted to pass through the first terminal through-hole 133 and the current collector through-hole 122c, the flange part 175a3, 175b3 can have an increased diameter compared to the body part 175a2, 175b2, by riveting. In addition, the rivet stem 175a and the rivet shell 175b can be coupled by riveting of the flange parts 175a3 and 175b3. In this case, the flange parts 175a3 and 175b3 can be located inside the protrusion part 122b of the second current collector plate 122. In addition, the rivet stem 175a and the rivet shell 175b can be coupled by riveting of the flange parts 175a3 and 175b3. In this case, the flange part 175a3, 175b3 can be located inside the protrusion part 122b of the second current collector plate 122.

During riveting, the flange part 175a3 of the rivet stem 175a is pressed together with the flange part 175b3 of the rivet shell 175b, and the diameter thereof can be larger than that of the current collector through-hole 122c. In addition, in the rivet stem 175a, the head part 175a1 can have the same diameter as the body part 175a2 and can be narrower than the flange part 175a3. The head part 175a1 of the rivet stem 175a can be located inside the head part 175b1 of the rivet shell 175b, and the diameter of the head part 175b1 of the rivet shell 175b can be larger than that of the body part 175b2 of the rivet shell 175b.

Here, the rivet shell 175b can be interposed between the rivet stem 175a and the current collector through-hole 122c and between the rivet stem 175a and the first terminal through-hole 133.

The blind rivet 175 can be inserted into and coupled to the first terminal through-hole 133 of the first terminal plate 131. For example, in a state of being inserted into the first terminal through-hole 133 and the current collector through-hole 122c, the blind rivet 175 can be pressed and riveted with the rivet shell 175b while the rivet stem 175a moves outward. The inner surface of the first terminal plate 131, which is pressed by the blind rivet 175, and the protrusion part 122b of the second current collector plate 122, can be coupled by welding. Because the first terminal plate 131 and the second current collector plate 122 are welded in a state of being pressed by the blind rivet 175, bonding strength can be improved.

The first terminal plate 131 can be exposed and protrude outward of the first cap plate 171.

The second current collection part 140 is made of metal and can electrically connect the second electrode plate 112 and the second terminal 150 to each other. The second current collection part 140 is a metal plate, and can include a third current collector plate 141 contacting and coupled to the second electrode tab of the second electrode plate 112 and a fourth current collector plate 142 contacting and coupled to the second terminal 150. In addition, the second current collection part 140 can be coupled to the electrode assembly 110 and the second terminal 150 in a form that is symmetrical to the first current collection part 120 on the basis of the electrode assembly 110. In addition, the second current collection part 140 can be made of aluminum or an aluminum alloy.

The second terminal 150 is made of metal and can be electrically connected to the second current collection part 140. According to some embodiments, the second terminal 150 can include a second terminal plate 151, a second terminal groove 152, and a second terminal through-hole 153. The second terminal 150 can be made of the same metal as the second current collection part 140.

The second terminal 150 can have the same shape and structure as the first terminal 130. However, the second terminal 150 can be coupled to the electrode assembly 110 through the second current collection part 140 in a form that is symmetrical to the first terminal 130 on the basis of the electrode assembly 110. In addition, the second terminal 150 can be made of aluminum or an aluminum alloy. In addition, the second terminal 150 and the second current collection part 140 are made of the same metal, and thus, can be directly coupled to each other by welding.

The case 160 has a substantially hollow rectangular parallelepiped shape having openings 161 and 162 formed on both sides, and the electrode assembly 110 coupled to the first current collection part 120 and the second current collection part 140 can be inserted into the inside of the case 160 through the openings 161 and 162.

The case 160 can include upper and lower surfaces of the rectangle extending along the second direction (y), which is the longitudinal direction of the case, and long sides of two rectangles extending along the second direction (y) connecting the long sides of the upper and lower surfaces. The case 160 can have the upper surface, the lower surface, and the two long side surfaces integrally formed with each other.

The case 160 can have a vent hole passing through the long side surface. A safety vent 163 can be installed in a vent hole of the case 160. In addition, the safety vent 163 can have a notch that is thinner than other regions and can be opened by a set pressure.

The first cap assembly 170 can be coupled to the left-side opening 161 of the case 160. According to some embodiments, the first cap assembly 170 can include a first cap plate 171, a first insulation member 172, and a first seal gasket 173.

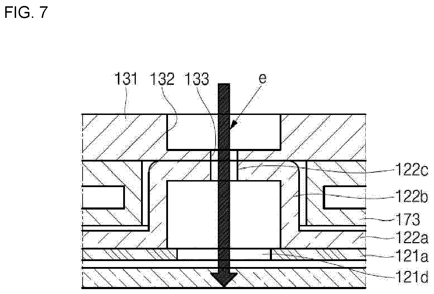

The first cap plate 171 has a flat rectangular plate shape and can seal the left-side opening 161 of the case 160. The first cap plate 171 can have a terminal hole passing through between an outer surface and an inner surface and an electrolyte injection port. The blind rivet 175 can pass through the first terminal through-hole 133 of the first terminal 130 and be coupled to the current collector through-hole 122c. In addition, the electrolyte injection port can be sealed by a stopper 176 after the first cap plate 171 is coupled to the case 160 and an electrolyte is injected into the case 160. Additionally, as shown in FIG. 7, an electrolyte (e) can be injected and filled through the first terminal through-hole 133, the current collector through-hole 122c, and the additional through-hole 121d. The blind rivet 175 is of a closed type and can seal the first terminal through-hole 133 into which the electrolyte (e) is injected, and the current collector through-hole 122c.

The first insulation member 172 can be interposed between the first cap plate 171 and the second current collector plate 122. The first insulation member 172 can be in close contact with the first cap plate 171 and the second current collector plate 122. The first insulation member 172 can be made of an insulating material, and can insulate the first cap plate 171 and the second current collector plate 122 from each other.

In addition, the first seal gasket 173 is made of an insulating material and is provided between the first cap plate 171 and the first terminal plate 131 to seal and insulate the first cap plate 171 and the first terminal plate 131 from each other. The first seal gasket 173 can prevent or reduce instances of external moisture or contaminants penetrating into the secondary battery 100 or can prevent electrolyte contained in the secondary battery 100 from leaking out. The first seal gasket 173 can be integrally provided with the first insulation member 172 by injection molding, and can be interposed between the first terminal 130 and the first cap plate 171. The first cap plate 171 can be electrically separated from the first terminal 130 by the first insulation member 172 and the first seal gasket 173.

In addition, after being coupled to the first current collection part 120, the electrode assembly 110 is accommodated in the case 160, and the first cap plate 171 coupled to the first terminal 130 can seal the opening of the case 160. In addition, the first current collection part 120 and the first terminal 130 can be coupled to each other by welding.

The second cap assembly 180 can be coupled to the right-side opening 162 of the case 160. According to some embodiments, the second cap assembly 180 can include a second cap plate 181, a second insulation member 182, and a second seal gasket 183. The second cap assembly 180 can have the same as the first cap assembly 170 in terms of shape and structure. In addition, the coupling shape and structure of the second cap assembly 180 and the second terminal 150 can be the same as those of the first cap assembly 170 and the first terminal 130. However, the coupling shape of the second cap assembly 180 and the second terminal 150 can be symmetrical to that of the first cap assembly 170 and the first terminal 130 on the basis of the case 160.

In the secondary battery 100, the first cap assembly 170 coupled to the first terminal 130 is coupled to an one side opening of the case 160, and the second cap assembly 180 coupled to the other opening of the case 160, and thus, the first terminal 130 and the second terminal 150 are located on both sides of the case 160. By including the first terminal 130 and the second terminal 150 on both sides of the secondary battery 100, respectively, when a plurality of secondary batteries 100 are combined in a module form, a cooling member can be coupled to the upper and lower regions of the case 160, respectively, to reduce deterioration of the secondary battery 100 and improve cooling performance.

As an example, in a state in which long side surfaces of the plurality of secondary batteries 100 are arranged to face each other, the battery module can electrically connect first terminals and/or second terminals respectively exposed to both sides.

In addition, by including the first terminal 130 and the second terminal 150 on both sides of the secondary battery 100, respectively, when a plurality of secondary batteries 100 are combined in a module form, a charge/discharge current can flow through each terminal in both directions, so that two terminals can be provided on one side, and thus, deterioration can be improved, compared to a case where charging and discharging current flows through two terminals on one side. In addition, when a plurality of secondary batteries 100 are combined in a module form, the respective terminals can be connected in both directions, and thus, high space utilization can be achieved.

As described above, in the secondary battery according to some embodiments of the present invention, by forming sufficient pressing force when welding a terminal and a current collector plate, the weldability of the terminal and the current collector plate can be relatively improved, and a relatively strong bonding strength can be induced.

In addition, in the secondary battery according to some embodiments of the present invention, by forming one end of a blind rivet that couples the terminal and the current collector plate into a closed type, leakage of an electrolyte can be prevented or reduced and, through this, a sealing effect can be maximized or improved.

While the foregoing embodiments are only illustrative example embodiments for carrying out the secondary battery according to the present invention, embodiments according to the present invention are not limited thereto, it will be understood by a person skilled in the art that various changes in form and details can be made therein without departing from the scope of embodiments according to the present invention as defined by the following claims, and their equivalents.

## Claims

1. A secondary battery (100) comprising:
an electrode assembly (110) having a first electrode tab and a second electrode tab exposed on opposite sides, respectively;
a first current collection part (120) electrically coupled to the first electrode tab;
a case (160) accommodating the electrode assembly (110) and the first current collection part (120);
a first cap plate (171) sealing an opening (161, 162) of the case (160);
a first terminal (130) mechanically and electrically coupled to the first current collection part (120) and exposed to outside of the first cap plate (171); and
a blind rivet (175) coupling the first terminal (130) and the first current collection part (120).

2. The secondary battery (100) as claimed in claim 1, wherein the first current collection part (120) includes a first current collector plate (121) coupled to the first electrode tab by welding, and a second current collector plate (122) contacting an outer surface of the first current collector plate (121) and contacting and coupled to an inner surface of the first terminal (130).

3. The secondary battery (100) as claimed in claim 2, wherein the first current collector plate (121) includes a central part (121a) having a central region protruding outward and having an outer surface coupled to an inside of the second current collector plate (122) by welding, and an edge part (121b) extending in opposite directions from the central part (121a) and welded to the first electrode tab of the electrode assembly (110).

4. The secondary battery (100) as claimed in claim 3,
wherein a bent part (121c) that is inclined from the central part (121a) toward the edge part (121b) is formed between the central part (121a) and the edge part (121b); and/or
wherein a size of the central part (121a) of the first current collector plate (121) is smaller than a size of an inner surface of the second current collector plate (122).

5. The secondary battery (100) as claimed in claim 3 or 4, wherein a protrusion part (122b) that protrudes outward is provided on the central region of the second current collector plate (122).

6. The secondary battery (100) as claimed in claim 5, wherein an outer surface of the protrusion part (122b) is configured to contact and be welded to an inner surface of the first terminal (130).

7. The secondary battery (100) as claimed in claim 5 or 6, wherein the protrusion part (122b) includes a current collector through-hole (122c).

8. The secondary battery (100) as claimed in claim 7, wherein the first terminal (130) includes a first terminal through-hole (133) at a position corresponding to the current collector through-hole (122c).

9. The secondary battery (100) as claimed in claim 8, wherein the protrusion part (122b) contacts a region adjacent to the first terminal through-hole (133) in a first terminal plate (131).

10. The secondary battery (100) as claimed in claim 8 or 9, wherein a diameter of the first terminal through-hole (133) is smaller than that of the current collector through-hole (122c).

11. The secondary battery (100) as claimed in any one of claims 8 to 10, wherein the blind rivet (175) passes through the first terminal through-hole (133) and the current collector through-hole (122c).

12. The secondary battery (100) as claimed in any one of claims 8 to 11,
wherein the blind rivet (175) is a closed-type blind rivet (175); and/or
wherein the blind rivet (175) comprises:
a rivet shell (175b) passing through the first terminal through-hole (133) and the current collector through-hole (122c); and
a rivet stem (175a) passing through the rivet shell (175b).

13. The secondary battery (100) as claimed in claim 12, wherein each of the rivet shell (175b) and the rivet stem (175a) comprises:
a head part (175a1, 175b1) outside a first terminal plate (131);
a body part (175a2, 175b2) extending from the head part (175a1, 175b1) and inserted into the first terminal through-hole (133) and the current collector through-hole (122c); and
a flange part (175a3, 175b3) extending from the body part (175a2, 175b2) and positioned inside the second current collector plate (122).

14. The secondary battery (100) as claimed in claim 13,
wherein in the rivet stem (175a), a diameter of the head part (175a1) is smaller than a diameter of the flange part (175a3); and/or
wherein in the rivet shell (175b), a diameter of the head part (175b1) is larger than a diameter of the flange part (175b3).

15. The secondary battery (100) as claimed in any one of claims 8 to 14, wherein on the central part (121a) of the first current collector plate (121), an additional through-hole (121d) is provided at a position corresponding to the current collector through-hole (122c).
